# FASCICULE DE BREVET EUROPEEN

(11) **EP 3 220 021 B1**
(45) Date de publication et mention de la délivrance du brevet: **07.10.2020**
(21) Numéro de dépôt: 17160606.4
(22) Date de dépôt: 13.03.2017
(51) Int. Cl.: F16K 3/314, G05D 16/06

(54) **DISPOSITIF REGULATEUR DE PRESSION D'UNE VANNE GAZ**
DRUCKREGULIERUNGSVORRICHTUNG EINES GASVENTILS
PRESSURE REGULATOR DEVICE FOR A GAS VALVE

(30) Priorité: 14.03.2016 FR 1652097
(43) Date de publication de la demande: 20.09.2017
(73) Titulaire: Suntec Industries France, 21600 Longvic (FR)
(72) Inventeur: RENARD, Jérôme, 21000 DIJON (FR)
(74) Mandataire: Oudin, Stéphane

(56) Documents cités:
- EP-A1- 2 977 847
- US-A- 3 960 358
- US-A1- 2007 272 316
- US-A1- 2010 270 490
- US-A1- 2014 020 771

## Description

### Domaine technique

La présente invention concerne le domaine des vannes gaz destinées à des brûleurs gaz et plus particulièrement un dispositif permettant d'améliorer la fonction régulateur de pression intégrée auxdites vannes gaz.

### Technique antérieure

Dans le domaine des vannes gaz, il est connu d'utiliser des dispositifs de régulation de pression intégrée auxdites vannes gaz. Ces derniers sont avantageusement du type pneumatique afin de limiter la présence d'organes électroniques complexes et donc de garantir une fiabilité optimale.

De manière classique, ces dispositifs pneumatiques, tels que ceux décrits, par exemple dans la demande de brevet américain US 2007/272316, comportent au moins :
- un robinet agissant sur le débit du gaz et pourvu d'au moins une partie mobile, du type clapet, selon une direction transversale à une conduite de gaz de sorte à obturer le cas échéant tout ou partie d'une section de passage de ladite conduite,
- une membrane actionnée par la pression du gaz et assurant la translation de ladite partie mobile du robinet pour obturer ou non ladite conduite de gaz, et
- des moyens de régulation, habituellement du type servo-régulateur, aptes à réguler la pression de gaz sous la membrane.

Un dispositif de régulation de pression est également connu de la demande de brevet US 3,960,358.

Certes, ces dispositifs connus sont efficaces, mais ils présentent l'inconvénient majeur d'être particulièrement encombrants. Cet encombrement est principalement imposé par les dimensions de la membrane. Ces dimensions découlent de la valeur de la force à appliquer sur la membrane par le gaz pour permettre la mise en mouvement de la partie mobile du robinet et, par conséquent, le passage ou non du gaz, cette force étant une fonction de la pression du gaz et de la surface de ladite membrane.

Par ailleurs, les dispositifs connus ne permettent pas de garantir une bonne qualité de régulation dans les bas débits.

### Exposé de l'invention

Le but de la présente invention est donc de pallier les inconvénients précédemment cités et de proposer un dispositif de régulation de pression destiné à une vanne gaz, particulièrement compact et garantissant une bonne qualité de régulation dans les bas débits.

A cet effet, la présente invention a pour objet un dispositif de régulation de pression de gaz selon la revendication 1.

De préférence, chaque orifice radial est aménagé du côté aval contre ledit flasque.

Le flasque comporte avantageusement un orifice central le traversant de part en part.

Le coulisseau comporte en outre un axe central apte, d'une part, à coulisser, de façon sensiblement étanche, à l'intérieur dudit orifice central du flasque et, d'autre part, à être solidarisé avec la membrane ou son support.

De manière avantageuse, le dispositif de régulation comporte des moyens de rappel exerçant un effort sur la membrane tendant à maintenir ou à ramener le coulisseau dans sa position "fermée". Ces moyens de rappel sont de préférence au moins un ressort hélicoïdal de compression disposé entre le flasque du corps et la membrane.

L'invention concerne également une vanne gaz comportant au moins une entrée de gaz, une sortie de gaz et un orifice de passage disposé entre lesdites entrée et sortie, remarquable en ce qu'elle comprend un dispositif de régulation de pression de gaz suivant l'invention.

Selon un mode de réalisation préféré, le dispositif de régulation est intégré dans la vanne entre les entrée et sortie de gaz au droit de l'orifice.

### Description sommaire des figures

D'autres avantages et caractéristiques ressortiront mieux de la description qui va suivre d'un mode d'exécution d'un dispositif de régulation de pression selon l'invention, en référence aux figures annexées sur lesquelles :
- la figure 1 est une vue d'ensemble en perspective et en coupe de la vanne gaz intégrant un dispositif de régulation de pression selon l'invention,
- la figure 2 est une vue éclatée en perspective et en coupe du dispositif de régulation de la vanne gaz de la figure 1,
- la figure 3 est une vue de détail en perspective du corps fixe du dispositif de régulation de la figure 2.

### Meilleure manière de réaliser l'invention technique

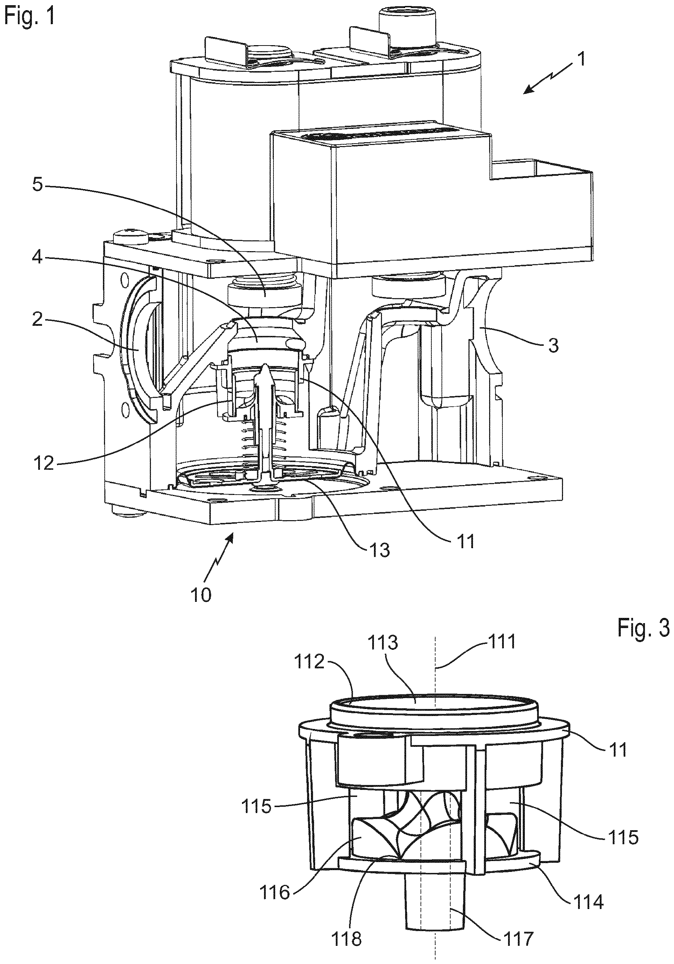

Sur la figure 1, on a représenté une vanne gaz 1 comportant au moins une entrée 2 de gaz, une sortie 3 de gaz, un orifice 4 de passage disposé entre lesdites entrée 2 et sortie 3, et un dispositif de régulation 10 de pression, selon l'invention, apte à interdire le passage de tout ou partie du gaz entre l'entrée 2 et la sortie 3 au travers de l'orifice 4.

La vanne gaz 1 comprend en outre au moins un robinet de sécurité 5 disposé de préférence entre l'entrée 2 de gaz et le dispositif de régulation 10 de pression.

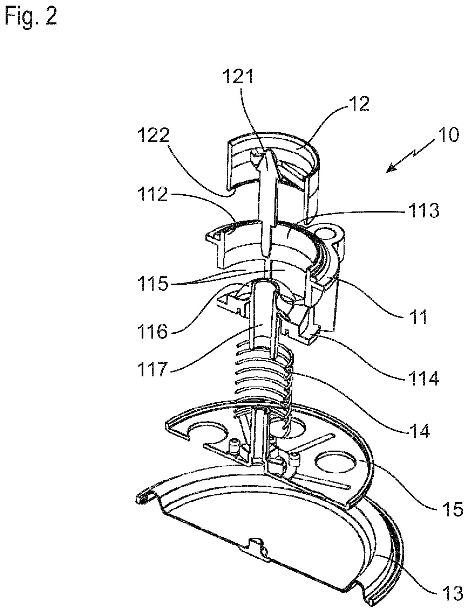

En référence aux figures 2 et 3, le dispositif de régulation 10 comporte un corps 11 fixé, de façon sensiblement étanche, à l'intérieur de la pompe 1 au droit de l'orifice 4 de passage, un coulisseau 12 mobile apte à coulisser, de façon sensiblement étanche, à l'intérieur dudit corps 11 le long de l'axe longitudinal 111 de ce dernier, et une membrane 13 apte à mettre en mouvement le coulisseau 12 sous l'effet d'une différence de pression du gaz dans la vanne gaz 1.

On désigne ici par "de façon sensiblement étanche" une étanchéité non pas absolue mais suffisante en regard des pressions mises en œuvre de manière classique dans les vannes gaz destinées à des brûleurs raccordés à un réseau de gaz urbain.

Le corps 11 est de forme globalement tubulaire de manière à définir une paroi interne 112 longitudinale cylindrique axée sur l'axe longitudinal 111 du corps 11. Ce dernier comporte du côté amont une ouverture 113 axiale et du côté aval un flasque 114 de fermeture sensiblement perpendiculaire à l'axe longitudinal 111 du corps 11 et obturant totalement axialement le corps 11. En outre, ledit corps 11 comporte au moins un orifice radial 115 traversant, de part en part, l'épaisseur du corps 11, du côté aval contre ledit flasque 114, de sorte à mettre en relation l'intérieur et l'extérieur du corps 11 pour permettre au gaz de passer axialement par l'ouverture 113 du côté amont du corps 11 et de passer du côté aval de l'intérieur vers l'extérieur du corps 11 pour ressortir en direction de la sortie 4 de gaz.

On désigne ici par "amont" et "aval" des éléments ou côtés d'une pièce disposés les uns à la suite des autres selon le sens de déplacement du gaz, c'est-à-dire selon le sens de l'entrée 2 de gaz vers la sortie 3 de gaz.

De plus, le terme "cylindre" ou "cylindrique" est à prendre ici au sens large et non limité au cylindre de révolution de section transversale circulaire.

Pour favoriser l'écoulement du gaz, le corps 11 comporte avantageusement quatre orifices radiaux 115 disposés régulièrement le long de sa périphérie.

Le flasque 114 comporte un élément de guidage 116 du gaz disposé en saillie à l'intérieur du corps 11 et un orifice central 117 traversant l'ensemble flasque 114 - élément de guidage 116 de part en part.

L'élément de guidage 116 a une forme permettant de guider le gaz venant de l'ouverture 113 du côté amont du corps 11 vers un point 118 situé sur le flasque 114 et dans le plan médian de chaque orifice radial 115. Pour ce faire, ledit élément de guidage 116 a une forme qui présente une portion au droit de chaque orifice radial 115, ladite portion s'évasant depuis le point 118 associé en direction des bords de l'orifice radial 115 associé, de l'intérieur du corps 11 et du côté amont de ce dernier. Chaque portion ne comporte avantageusement aucune face plane.

Enfin, on comprend bien que la section transversale de l'élément de guidage 116 a des dimensions inférieures à celles de la paroi interne 112 du corps 11 pour permettre le passage du coulisseau 12 mobile.

Par ailleurs, le dispositif de régulation 10 comporte un coulisseau 12 mobile, qui est apte à coulisser, de façon sensiblement étanche, à l'intérieur dudit corps 11 le long de l'axe longitudinal 111 de ce dernier. Pour ce faire, ledit coulisseau 12 est de forme tubulaire creux pour permettre le passage du gaz et est tel que sa section transversale externe est homothétique à la section transversale de la paroi interne 112 longitudinale du corps 11. Toutefois, pour un coulissement sensiblement étanche du coulisseau 12, sa section transversale externe est très légèrement inférieure à ladite section transversale de la paroi interne 112. L'Homme du Métier n'aura aucune difficulté pour déterminer les tolérances à mettre en œuvre lors de la fabrication des paroi interne 112 du corps 11 et coulisseau 12 pour obtenir une étanchéité dynamique suffisante pour le bon fonctionnement du dispositif de régulation 10 et donc de la vanne gaz 1.

Le coulisseau 12 comporte en outre un axe central 121 apte, d'une part, à coulisser, de façon sensiblement étanche, à l'intérieur dudit orifice central 117 le long de l'axe longitudinal de ce dernier et, d'autre part, à être solidarisé avec la membrane 13, directement ou par l'intermédiaire de son support 15, pour assurer la mise en mouvement du coulisseau 12 sous l'effet d'une différence de pression de gaz dans la vanne gaz 1.

Ainsi configuré, le coulisseau 12 coulisse en appui sur la paroi interne 112 du corps 11 entre une position "ouverte" dans laquelle chaque orifice radial 115 est tout ou partie ouvert et une position "fermée" dans laquelle chaque orifice radial 115 est totalement obturé par ledit coulisseau 12, la face annulaire avale 122 de ce dernier étant alors en appui contre le flasque 114 du corps 11 de sorte à obtenir une étanchéité suffisante pour le bon fonctionnement du dispositif de régulation 10 et donc de la vanne gaz 1.

Par ailleurs, le dispositif de régulation 10 comporte des moyens de rappel 14 exerçant un effort sur la membrane 13 tendant à maintenir ou à ramener le coulisseau 12 dans sa position "fermée". Lesdits moyens de rappel 14 sont de préférence au moins un ressort hélicoïdal de compression disposé entre le flasque 114 du corps 11 et la membrane 13 ou son support 15.

On comprend alors bien que, sous l'effet d'une différence de pression de gaz, la membrane 13 se déplace de sorte à mettre en mouvement le coulisseau 12 depuis sa position "fermée" vers sa position "ouverte" et ainsi permettre au gaz de s'écouler entre l'entrée 2 et la sortie 3 de la vanne gaz 1. De même, on comprend bien que le dispositif de régulation 10 permet, en association avec un servo-régulateur, non représenté, de fournir une pression stable malgré les fluctuations de pression du réseau fournissant le gaz afin de garantir le bon fonctionnement du brûleur gaz, non représenté, associé à la vanne gaz 1, en ouvrant ou refermant le coulisseau 12 en fonction des besoins.

On comprend également bien qu'avec la géométrie du dispositif de régulation 10 selon l'invention la membrane 13 a des dimensions significativement réduites par rapport à un dispositif de régulation de l'Art antérieur. En effet, la force à appliquer sur la membrane 13 est moindre, car elle ne doit pas lutter contre les efforts de pression du gaz sur les parois du coulisseau 12 lors de son déplacement entre ses positions "fermée" et "ouverte". Cette caractéristique essentielle du dispositif de régulation 10 selon l'invention est obtenue grâce au fait que les efforts créés sur le coulisseau 12 par la différence de pression entre l'amont et l'aval s'annulent de par sa forme radiale.

Enfin, on comprend bien que la forme spécifique de l'élément de guidage 116 permet d'améliorer fortement la progressivité du débit de gaz par chaque orifice radial 115 lors de l'ouverture du dispositif de régulation 10. Cette caractéristique est particulièrement avantageuse pour garantir une bonne qualité de la régulation aux bas débits. En effet, pour pouvoir réguler un débit de gaz le plus bas possible, il faut pouvoir faire varier la section de passage dans une très grande plage.

De plus, si on compare la section de passage avec l'élément de guidage 116, nommée ci-après "SP", et celle globalement rectangulaire obtenue sans l'élément de guidage 116, nommée ci-après "SR", on comprend bien que, pour les bas débits, la régulation est plus stable et que cela permet par conséquent d'élargir la plage d'utilisation du dispositif de régulation 10.

En effet, avec la section SR, pour réguler, par exemple, à 4% de section ouverte, il faut déplacer le coulisseau 12 sur une course correspondant à 4% de sa course maximale et une instabilité de positionnement de +/- 2 % sur la course conduit alors à une variation de +/- 2 % de la section maximale correspondant à une variation de +/- 50 % de la section ouverte.

En comparaison, avec la section SP, pour réguler à 4% de section ouverte, il faut déplacer le coulisseau 12 sur une course correspondant à 22% de sa course maximale et une instabilité de positionnement de +/- 2% sur la course conduit alors à une variation de +/- 0,8% de la section maximale correspondant seulement à une variation de +/- 20 % de la section ouverte.

La section de passage SP obtenue avec l'élément de guidage 116 permet d'obtenir plus de précision et de stabilité pour les bas débits et donc d'avoir de la progressivité d'ouverture sur toute la plage d'utilisation du dispositif de régulation 10.

Enfin, le dispositif de régulation 10, selon l'invention permet également d'élargir la plage d'utilisation vers les forts débits. En effet, pour alimenter le dessous de la membrane 13 afin de déplacer le coulisseau 12, on utilise le gaz sous pression issu immédiatement de l'amont du dispositif de régulation 10, juste après l'orifice 4, qui sert également de siège au robinet de sécurité 5. Ainsi, c'est donc la perte de charge produite par l'ensemble corps 11 - coulisseau 12, qui détermine la différence de pression disponible pour manœuvrer la membrane 13 et donc le coulisseau 12.

Dans la mesure où, comme expliqué précédemment, il n'y a que peu d'effort à faire pour manœuvrer le coulisseau 12, on pourra ouvrir ce dernier en grand de sorte à laisser passer plus de débit.

Dans l'exemple de réalisation qui vient d'être décrit le dispositif de régulation 10 est entièrement intégré à la vanne gaz 1. Toutefois, sans sortir du cadre de la présente invention, le dispositif de régulation 10 pourra être indépendant de la vanne gaz 1 et raccordé à cette dernière. Il va de soi que cette dernière configuration est moins intéressante, car elle augmente l'encombrement et le prix de revient de l'ensemble vanne gaz 1 - dispositif de régulation 10.

### Possibilités d'application industrielle

Le dispositif de régulation selon l'invention s'applique plus particulièrement à des vannes gaz, mais il peut également être utilisé dans d'autres domaines et notamment avec des fluides autres que gazeux.

Enfin, il va bien entendu de soi que la présente invention n'est pas limitée à l'exemple de réalisation préférentiel décrit, mais qu'elle peut être modifiée ou adaptée en fonction des besoins ou des exigences particulières, sans pour autant sortir du cadre de l'invention.

## Revendications

1. Dispositif de régulation (10) de pression de gaz comportant un corps (11), un coulisseau (12) mobile et une membrane (13) apte à mettre en mouvement le coulisseau (12) sous l'effet d'une différence de pression du gaz, ledit corps (11) comportant une paroi interne (112) longitudinale cylindrique, une ouverture (113) axiale du côté amont, au moins un orifice radial (115) traversant, de part en part, l'épaisseur du corps (11) et du côté aval un flasque (114) de fermeture sensiblement perpendiculaire à l'axe longitudinal (111) dudit corps (11), le flasque (114) comportant un élément de guidage (116) du gaz disposé en saillie à l'intérieur du corps (11), ledit élément de guidage (116) ayant une forme permettant de guider le gaz venant de l'ouverture (113) du côté amont du corps (11) vers un point (118) situé sur le flasque (114) et dans le plan médian de chaque orifice radial (115), le coulisseau (12) étant tubulaire creux et coulissant de façon sensiblement étanche à l'intérieur dudit corps (11) en appui contre la paroi interne (112) entre une position "ouverte" dans laquelle chaque orifice radial (115) est au moins en partie ouvert pour permettre le passage du gaz venant de l'ouverture (113) et une position "fermée" dans laquelle chaque orifice (115) est totalement obturé par ledit coulisseau (12), la face annulaire aval (122) de ce dernier étant alors en appui contre le flasque (114) du corps (11), et réciproquement, ledit dispositif de régulation (10) étant **caractérisé en ce que** ledit élément de guidage (116) a une forme qui présente une portion au droit de chaque orifice radial (115), ladite portion s'évasant depuis le point (118) associé en direction des bords de l'orifice radial (115) associé, de l'intérieur du corps (11) et du côté amont de ce dernier.

2. Dispositif de régulation (10) suivant la revendication 1, **caractérisé en ce que** chaque orifice radial (115) est aménagé du côté aval contre ledit flasque (114).

3. Dispositif de régulation (10) suivant l'une quelconque des revendications 1 ou 2, **caractérisé en ce que** le flasque (114) comporte un orifice central (117) le traversant de part en part.

4. Dispositif de régulation (10) suivant la revendication 3, **caractérisé en ce que** le coulisseau (12) comporte en outre un axe central (121) apte, d'une part, à coulisser, de façon sensiblement étanche, à l'intérieur dudit orifice central (117) du flasque (114) et, d'autre part, à être solidarisé avec la membrane (13) ou son support (15).

5. Dispositif de régulation (10) suivant l'une quelconque des revendications 1 à 4, **caractérisé en ce qu'**il comporte des moyens de rappel (14) exerçant un effort sur la membrane (13) tendant à maintenir ou à ramener le coulisseau (12) dans sa position "fermée".

6. Dispositif de régulation (10) suivant la revendication 5, **caractérisé en ce que** les moyens de rappel (14) sont au moins un ressort hélicoïdal de compression disposé entre le flasque (114) du corps (11) et la membrane (13).

7. Vanne gaz (1) comportant au moins une entrée (2) de gaz, une sortie (3) de gaz et un orifice (4) de passage disposé entre lesdites entrée (2) et sortie (3), **caractérisée en ce qu'**elle comprend un dispositif de régulation (10) de pression de gaz suivant l'une quelconque des revendications 1 à 6.

8. Vanne gaz (1) suivant la revendication 7, **caractérisée en ce que** le dispositif de régulation (10) est intégré dans la vanne (1) entre les entrée (2) et sortie (3) de gaz au droit de l'orifice (4).

## Patentansprüche

1. Reguliervorrichtung (10) eines Gasdrucks, umfassend einen Körper (11), einen beweglichen Schieber (12) und eine Membran (13), die geeignet ist, den Schieber (12) unter der Wirkung einer Gasdruckdifferenz in Bewegung zu versetzen, wobei der Körper (11) eine längliche, zylindrische Innenwand (112), eine axiale Öffnung (113) auf stromaufwärtiger Seite, mindestens ein radiales Loch (115), das die Dicke des Körpers (11) beidseits durchsetzt, und auf stromabwärtiger Seite einen Flansch (114) zum Verschließen umfasst, der im Wesentlichen senkrecht zur Längsachse (111) des Körpers (11) verläuft, wobei der Flansch (114) ein Führungselement (116) des Gases umfasst, das vorspringend innerhalb des Körpers (11) angeordnet ist, wobei das Führungselement (116) eine Form aufweist, die es ermöglicht, das von der Öffnung (113) auf stromaufwärtiger Seite des Körpers (11) kommende Gas zu einem Punkt (118) hin zu führen, der sich auf dem Flansch (114) und in der Mittelebene jedes radialen Lochs (115) befindet, wobei der Schieber (12) rohrförmig hohl ist und auf im Wesentlichen dichte Weise innerhalb des Körpers (11) anliegend an die Innenwand (112) zwischen einer "offenen" Position, in der jedes radiale Loch (115) mindestens teilweise offen ist, um den Durchfluss des von der Öffnung (113) kommenden Gases zu ermöglichen, und einer "geschlossenen" Position gleitet, in der jedes Loch (115) von dem Schieber (12) vollständig verschlossen wird, wobei die stromabwärtige, ringförmige Fläche (122) dieses Letzteren dann an dem Flansch (114) des Körpers (11) anliegt, und umgekehrt, wobei die Reguliervorrichtung (10) **dadurch gekennzeichnet ist, dass**, das Führungselement (116) eine Form aufweist, die einen Abschnitt im Bereich jedes radialen Lochs (115) aufweist, wobei sich der Abschnitt ausgehend von dem zugehörigen Punkt (118) in Richtung der Ränder des zugehörigen radialen Lochs (115), des Inneren des Körpers (11) und der stromaufwärtigen Seite dieses Letzteren weitet.

2. Reguliervorrichtung (10) nach Anspruch 1, **dadurch gekennzeichnet, dass** jedes radiale Loch (115) auf stromabwärtiger Seite gegen den Flansch (114) eingerichtet ist.

3. Reguliervorrichtung (10) nach einem der Ansprüche 1 oder 2, **dadurch gekennzeichnet, dass** der Flansch (114) ein Mittelloch (117) umfasst, das ihn beidseits durchsetzt.

4. Reguliervorrichtung (10) nach Anspruch 3, **dadurch gekennzeichnet, dass** der Schieber (12) weiter eine Mittelachse (121) umfasst, die geeignet ist, einerseits auf im Wesentlichen dichte Weise innerhalb des Mittellochs (117) des Flanschs (114) zu gleiten und andererseits mit der Membran (13) oder ihrem Träger (15) fest verbunden zu werden.

5. Reguliervorrichtung (10) nach einem der Ansprüche 1 bis 4, **dadurch gekennzeichnet, dass** sie Rückstellmittel (14) umfasst, die eine Kraft auf die Membran (13) ausüben, die dazu neigt, den Schieber (12) in seiner "geschlossenen" Position zu halten oder ihn in diese zurückzubringen.

6. Reguliervorrichtung (10) nach Anspruch 5, **dadurch gekennzeichnet, dass** die Rückstellmittel (14) mindestens eine Spiraldruckfeder sind, die zwischen dem Flansch (114) des Körpers (11) und der Membran (13) angeordnet ist.

7. Gasventil (1), umfassend mindestens einen Gaseintritt (2), einen Gasaustritt (3) und ein Durchflussloch (4), das zwischen dem Eintritt (2) und dem Austritt (3) angeordnet ist, **dadurch gekennzeichnet, dass** es eine Reguliervorrichtung (10) eines Gasdrucks nach einem der Ansprüche 1 bis 6 umfasst.

8. Gasventil (1) nach Anspruch 7, **dadurch gekennzeichnet, dass** die Reguliervorrichtung (10) in dem Ventil (1) zwischen dem Gaseintritt (2) und dem -austritt (3) im Bereich des Lochs (4) eingebaut ist.

## Claims

1. Gas pressure regulator device (10) including a body (11), a moving slider (12) and a diaphragm (13) capable of setting the slider (12) in motion under the effect of a difference in pressure of the gas, said body (11) including a cylindrical longitudinal inner wall (112), an axial opening (113) on the upstream side, at least one radial orifice (115) passing through, from end to end, the thickness of the body (11) and on the downstream side a closing flange (114) substantially perpendicular to the longitudinal axis (111) of said body (11), the flange (114) including a guide element (116) for guiding the gas, disposed such that it projects inside the body (11), said guide element (116) having a shape that allows the gas originating from the opening (113) on the upstream side of the body (11) to be guided towards a point (118) situated on the flange (114) and in the median plane of each radial orifice (115), the slider (12) being hollow and tubular and sliding in a substantially sealed manner inside said body (11) while bearing against the inner wall (112) between an "open" position wherein each radial orifice (115) is at least partially open to allow the gas originating from the opening (113) to pass and a "closed" position wherein each orifice (115) is fully closed off by said slider (12), the downstream annular face (122) thereof thus bearing against the flange (114) of the body (11), and vice-versa, said regulator device (10) being **characterised in that** said guide element (116) has a shape which has a portion opposite each radial orifice (115), said portion flaring out from the associated point (118) towards the edges of the associated radial orifice (115), the interior of the body (11) and the upstream side thereof.

2. Regulator device (10) according to claim 1, **characterised in that** each radial orifice (115) is made on the downstream side against said flange (114).

3. Regulator device (10) according to any one of claims 1 or 2, **characterised in that** the flange (114) includes a central orifice (117) passing therethrough from end to end.

4. Regulator device (10) according to claim 3, **characterised in that** the slider (12) further includes a central shaft (121) capable, on the one hand, of sliding, in a substantially sealed manner, inside said central orifice (117) of the flange (114) and, on the other hand, of being rigidly connected to the diaphragm (13) or to the support (15) thereof.

5. Regulator device (10) according to any one of claims 1 to 4, **characterised in that** it includes return means (14) exerting a force on the diaphragm (13) biased to hold or bring the slider (12) back into the "closed" position thereof.

6. Regulator device (10) according to claim 5, **characterised in that** the return means (14) are at least a helical compression spring disposed between the flange (114) of the body (11) and the diaphragm (13).

7. Gas valve (1) having at least a gas inlet (2), a gas outlet (3) and a passage orifice (4) disposed between said inlet (2) and outlet (3), **characterised in that** it comprises a gas pressure regulator device (10) according to any one of claims 1 to 6.

8. Gas valve (1) according to claim 7, **characterised in that** the regulator device (10) is integrated into the valve (1) between the gas inlet (2) and outlet (3) opposite the orifice (4).
